(19) **Europäisches Patentamt**
**European Patent Office**
**Office européen des brevets**

(11) **EP 2 325 673 B1**

(12) **EUROPEAN PATENT SPECIFICATION**

(45) Date of publication and mention
of the grant of the patent:
**09.05.2012 Bulletin 2012/19**

(51) Int Cl.:
***G01V 1/18*** *(2006.01)*

(21) Application number: **10170802.2**

(22) Date of filing: **26.07.2010**

(54) **Seismograph sensor**

Erdbebensensor

Capteur de sismographe

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**

(30) Priority: **27.10.2009 IT AN20090032 U**

(43) Date of publication of application:
**25.05.2011 Bulletin 2011/21**

(73) Proprietor: **Ronchini, Riccardo**
**60019 Senigallia (AN) (IT)**

(72) Inventor: **Ronchini, Riccardo**
**60019 Senigallia (AN) (IT)**

(74) Representative: **Cutropia, Gianluigi**
**Ing. Claudio Baldi s.r.l.**
**Viale Cavallotti, 13**
**60035 Jesi (AN) (IT)**

(56) References cited:
**EP-A2- 0 184 401      EP-A2- 0 188 014**
**GB-A- 2 366 474      US-A- 2 487 029**
**US-A- 3 067 404      US-A- 3 344 397**

## Description

The present patent application for industrial invention relates to a seismograph sensor.

Seismograph sensors or seismometers are known on the market, such as the pendulum seismograph that comprises a frame fixed to ground, and an internal mass suspended from the frame by means of a spring. When the ground vibrates because of a seismic shock, the inertial mass moves and causes the oscillation of the spring. A measuring mechanism measures the elongation of the spring that indicates the motion of the ground due to the seismic phenomenon.

Modern seismographs are provided with complex attenuation systems of spring oscillations and use signal amplification methods by means of mechanical and/or electronic devices that amplify signals only in a specific frequency band.

However, similar types of seismographs are very expensive because they require complex and highly-accurate mechanical devices. Moreover, their use is very limited. In fact, in order to detect a sussultatory and/or ondulatory shock at least two seismographs with different structure must be provided and disposed both along the horizontal and the vertical axis.

A scientific publication proposed a 0.5W/8Ω small traditional loudspeaker with a total diameter of approximately 120 mm as a seismograph sensor. An internal mass composed of bolts screwed onto a screw was disposed on the loudspeaker cone. When the loudspeaker moves up and down because of ground vibrations, the inertial mass exerts a force on the cone, generating electrical voltage in the loudspeaker coil that is connected jointly with the membrane of the loudspeaker. The electrical voltage generated by the loudspeaker is related with ground vibration.

This type of seismograph sensor gives poor results, first of all because the resonance frequency is too high, if compared with the frequency band of seismic waves (infrasonic band). It is known that small loudspeakers tend to have higher resonance frequencies than large loudspeakers. Moreover, the induced electromotive force generated in a small loudspeaker is too low to obtain interesting results. Consequently, the sensitivity of such a seismograph sensor is very low.

Moreover, such a sensor is not very reliable because in case of strong seismic shocks, the weight of the internal mass would tend to break the cone of the loudspeaker that is made with a very fragile membrane. Finally, it is not possible to orientate such a sensor along an axis other than the vertical axis, because the inertial mass would be supported in projecting position.

EP 0 184 401 discloses a variflux vibration transducer wherein the coil with winding is stationary relative the casing and spring means elastically support a non-magnetic electric conductor for axial movement with respect the magnet.

US 3 067 404 discloses a vibration detector comprising a base plate with a shaft fixed to a stationary coil and a mobile magnetic assembly fixed by springs to the base shaft.

GB 2 366 474 and US 2,487,029 disclose geophones according to the preamble of claim 1. Said geophones comprise a magnet and a coil concentrically arranged around a central pole.

US 3 344 397 discloses an electromechanical transducer comprising a mobile coil fixed to a rigid shaft connected to two diaphragm springs.

EP 0188 014 discloses a geophone spring.

The purpose of the present invention is to eliminate the drawbacks of the prior art, devising a seismograph sensor that is economic, practical, versatile and simple to install and use.

Another purpose of the present invention is to provide such a seismograph sensor that is effective, sensitive and reliable.

These purposes are achieved by the present invention according to the features claimed in the independent claim 1.

Advantageous embodiments are disclosed in the dependent claims.

The seismograph sensor of the invention comprises:

-    a toroidal magnet disposed between a lower polar plate provided with core and an upper polar plate in such a way to generate an air-gap,
-    a basket mounted on the upper polar plate,
-    a mobile coil comprising a cylindrical support on which a winding is wound, said mobile coil being centered on the core to move axially in the air-gap with a displacement related to the displacement suffered by the sensor due to a seismic shock,
-    at least two centering devices composed of an elastic suspension that anchors the mobile coil to the basket, and
-    output terminals electrically connected to the winding of the mobile coil to generate an outgoing voltage signal that indicates the movement of said mobile coil in the air-gap.

The advantages of the seismograph sensor according to the invention are evident. In fact, such a seismograph sensor has a limited cost, high sensitivity, high reliability and versatility since it can be used for multiple applications and can be disposed with any type of orientation.

Additional characteristics of the invention will become evident from the detailed description below, which refers to a merely illustrative, not limiting, embodiment, as shown in the enclosed figures, wherein:

-    Fig. 1 is an axial cross-sectional diagrammatic view of the seismograph sensor of the invention;
-    Fig. 1A is an enlarged view of the detail contained in circle A of Fig. 1;

- Fig. 2 is a front view of the mobile coil of the seismograph sensor of Fig. 1;
- Fig. 3 is a top view of a centering device of the seismograph sensor of Fig. 1; and
- Fig. 4 is the same as Fig. 3, except for it illustrates a second embodiment of a centering device.

Referring to the above figures, the seismograph sensor of the invention is disclosed, which is generally indicated with reference numeral (1).

The seismograph sensor (1) comprises a permanent magnet (2) with toroidal shape that is disposed between a lower polar plate (3) and an upper polar plate (4). The magnet (2) is advantageously made of neodymium. In fact neodymium has higher efficiency that ferrite, the size being equal; therefore, higher magnetic induction values are obtained in the air-gap with respect to a ferrite magnet.

The upper polar plate (4) is toroidal like the magnet (2); whereas the lower polar plate (3) has a core (30). The magnet (2) is arranged on the lower polar plate (3) and centered on the core (30). The upper polar plate (4) is arranged on the magnet (2) and centered on the core (30).

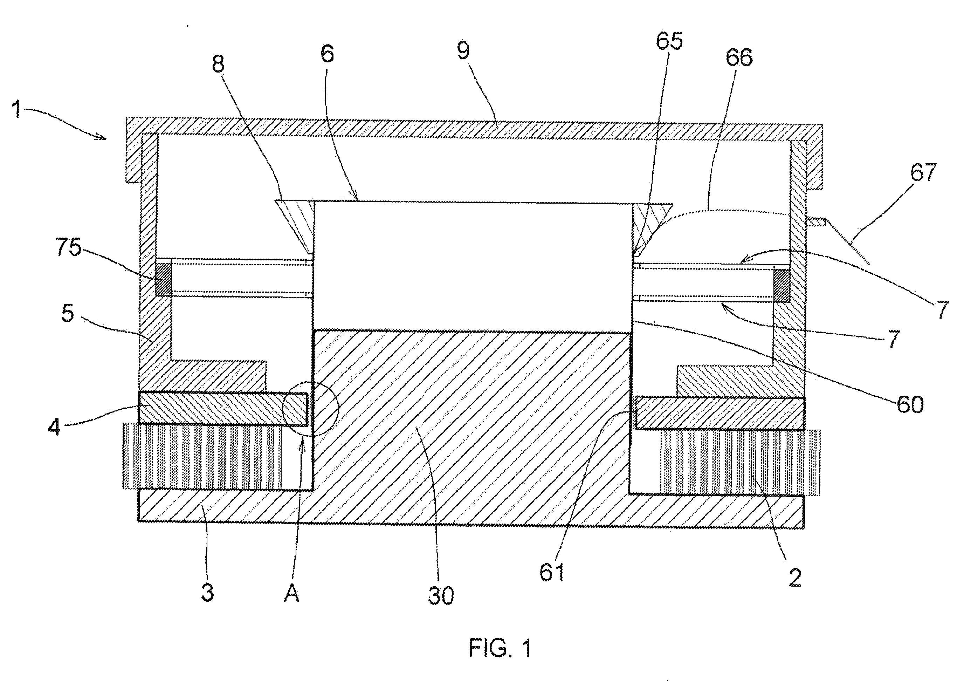

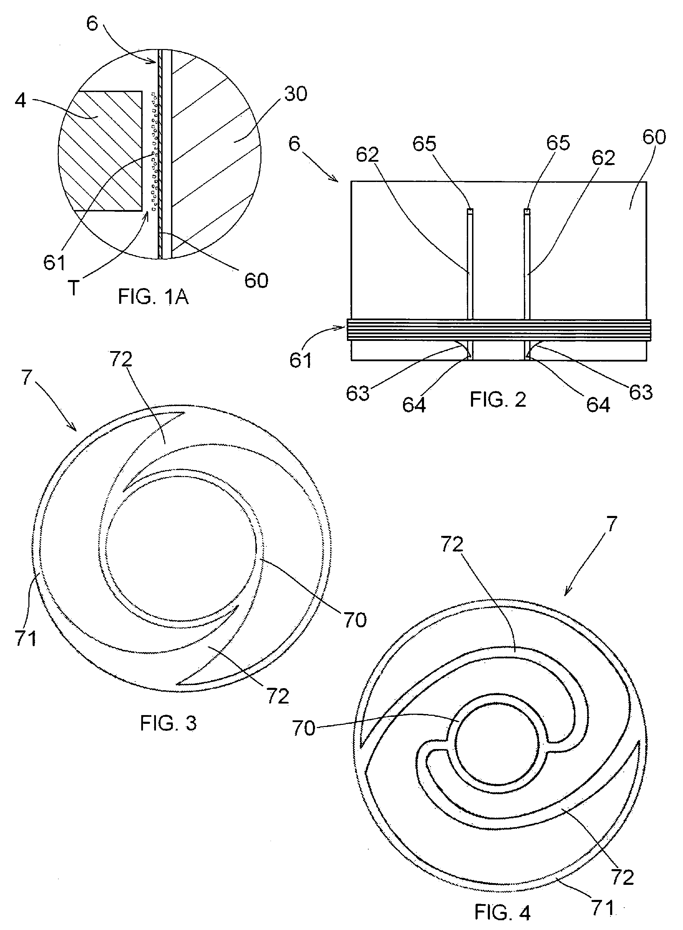

In such a way, as shown in Fig. 1A, a toroidal air space, called air-gap (T), is formed between the external surface of the core (30) and the internal surface of the magnet (2) and of the upper polar plate (4).

The upper polar plate (4) is fixed to the lower surface of a basket (5), generally by means of screws.

A mobile coil (6) is centered on the core (30) of the lower polar plate in such a way to move axially in the air-gap (T). The mobile core (6) comprises a cylindrical support (60) on which a winding (61) is wound.

The cylindrical support (60) of the mobile coil has a relatively thin thickness and a very large diameter, preferably higher than 100 mm. The cylindrical support (60) is made of a -suitable material, such as aluminum sheet with thickness of about 100 micron, or polyamide sheet (Kapton) with thickness of 125 micron or fiber glass sheet with thickness of 160 micron.

Referring to Fig. 2, the winding (61) is made with a conductor wire (63) having a suitably small diameter, for example lower than 0.1 mm, preferably equal to approximately 0.06. This is done to maximize the length of the conductor. For example, using a 0.06 mm conductor and winding it with a suitable number of layers (about 10 layers) on a coil support with 100 mm diameter, with height of the winding of about 30 mm, the conductor wire (63) can reach or exceed 1000 m. The conductor wire (63) is preferably made of copper or aluminum.

To avoid breaking the wire (63) of the winding, on the external surface of the cylindrical support (60) two tracks or strips (62) made of conductive material, such as phosphorous bronze, are disposed under the winding.

To obtain good insulation, the wire (63) of the winding is covered with insulating paint and also the conductive strips (62) are coated with insulating paint at the ends where soldering is carried out. Insulation between the wire (63) and the two strips (62) can be improved with a thin veil of Kapton.

The two ends (64) of the winding wire are soldered at the lower ends of the conductive strips (62). Instead, two flexible wires (66) with cross-section much higher than the wire (63) of the winding are soldered at the upper ends (65) of the conductive strips. The flexible wires (66) are soldered at output terminals (67) suitably fixed to the basket.

The mobile coil (6) is anchored to the basket (5) by means of two centering devices (7) acting as return spring that are adapted to maintain the mobile coil (6) perfectly centered in the air-gap (T). In fact, because of efficiency reasons in terms of magnetic induction, the space between the external surface of the winding and the internal surface of the upper plate (4) must be suitably minimized. In fact, signal distortion would occur if the mobile coil (6) came in contact with the upper plate (4) or with the core (30) and therefore the axial movement of the coil (6) in the air-gap (T) must be perfectly centered by means of the two centering devices (7).

The seismograph sensor (1) comprises two centering devices (7) arranged in parallel position. Referring to Fig. 3, each centering device (7) is formed of a suitably shaped metal plate with low thickness. The centering device (7) comprises a central collar (70) that is fixed between the external surface of the cylindrical support (60) of the mobile coil and a peripheral collar (71) that is fixed to the basket (5). The central collar (70) is connected to the peripheral collar (71) by means of at least two spokes (72) disposed in diametrally opposite position. Each spoke (72) has a curved shape with increasing width from the central collar (70) to the peripheral collar.

Referring to Fig. 1, the two centering devices (7) are maintained apart and parallel by means of a spacer (75) with toroidal shape fixed to the basket (5). Such a centering system of the mobile coil allows for a very high accuracy of the axial motion of the mobile equipment, with lateral (radial) travels lower than 0.1 mm.

Fig. 4 illustrates a second embodiment of the centering device (7) in which the two spokes make a curve of about 180° with spiral profile.

An inertial mass (8) with toroidal shape is firmly fixed to the upper part of the cylindrical support (60) of the mobile coil.

Preferably the inertial mass (8) has a truncated-conical or tapered shape with upward increasing diameter. The lower end of the inertial mass (8) is situated above the central collar (70) of the upper centering device.

The presence of the inertial mass (8) allows for adjusting within certain limits the resonance frequency of the mobile equipment that also depends on the elastic constant of the centering devices (7). Therefore, the inertial mass (8) and the elastic constant of the centering devices (7) must be chosen in such a way to bring the resonance frequency of the mobile equipment within the typical band of seismic waves (a few Hertz).

For example, with two centering devices made of metal plate such as the ones shown in the figures, an inertial mass of approximately 100 - 200 g can be used to obtain a resonance frequency of approximately 1 Hz.

A lid (9) is disposed on the basket (5) in order to protect the inside of the seismograph sensor (1) against dust or other disturbing elements.

Following is a description of the operation of the seismograph sensor of the invention.

Every time, for any reason, the mobile (6) coil is moved with respect to the magnetic complex, an electromotive force or voltage is generated at the terminals (67) of the sensor due to the known phenomenon of electromagnetic induction. More precisely, the value of such induced electromotive force is given by the following formula:

$$\text{e.m.f.} = B * l * v$$

where

B is the magnetic induction value in the air-gap (T) of the magnetic complex,
I is the length of the wire (63) of the winding, and
V is the speed of the mobile coil (6) with respect to the magnetic complex.

To increase such induced electromotive force to the maximum values possible, the following devices have been implemented:

i) The magnetic complex is made in such a way to maximize the magnetic induction value in the air-gap, using high-efficiency magnets, such as neodymium magnets (2);
ii) A small-sized wire of the winding is used to wind the highest number of turns possible on the support (60) of the mobile coil;
iii) A pair of elastic suspensions (7) is used to allow for the highest elongation possible of the mobile coil (6) and consequently the highest speed possible of the mobile with respect to the magnetic complex.

In view of the above it is possible to obtain a product of magnetic induction (B) by length (I) of the wiring also higher than 1000 T*m. In fact, it must be considered that typical magnetic induction values in the air-gap are usually 1 Tesla.

If the output terminals (67) are connected to a standard oscilloscope able to detect voltage signals lower than $10^{-3}$ Volt, it is possible to detect a speed of the mobile coil with respect to the magnetic complex lower than $10^{-6}$ m/s; that is to say 1 mm covered in 16 minutes.

If we had a measurement instrument able to detect 1 microVolt, it would be possible to detect a speed equivalent to the one in a material point that covers 1 mm in 280 hours. This guarantees excellent sensitivity of the sensor (1).

Moreover, the voltage signal at the outlet terminals of the transducer can be amplified with a suitable electronic instrument, in order to further improve the sensitivity of the seismograph sensor.

It must be noted that, in addition to the aforesaid electromagnetic induction effect, also another one exists, being explained according to the electromagnetic induction law.

Since the core (30) of the lower polar plate is magnetized, a flow of magnetic field concatenated with the winding (61) and variable over time can be generated during the movement of the mobile coil (6).

Such a flow would cause the appearance of an additional induced electromotive force at the outlet terminals (67) of the device. To eliminate such a component it is sufficient to increase the height of the core (30) in such a way to guarantee consistency over time of the magnetic flow concatenated to the coil during the movement of the coil. Therefore, the height of the core (30) must be such that the winding of the mobile coil always sees the core inside it during the movement of the mobile coil. For example, the height of the core (30) can be higher than 80 mm, preferably 100 mm.

Moreover, if you want to adjust the damping factor of the motion of the mobile equipment, it will be sufficient to wind a second winding to the primary winding (61) in coaxial position. The contacts of the second winding are brought outside the coil and short-circuited.

Following is a description of the applications and uses of the seismograph sensor (1) of the invention.

One of the possible uses consists in constraining the seismograph sensor (1) to a suitable support anchored to the ground or to a building. If the support is put into vibration, because of inertial effect, the mobile core (6) will be in turn put in movement with respect to the magnetic complex, generating induced electromotive force at the output terminals (67) of the sensor. The electrical signal at the output terminals is a representation of the mechanical stress that has generated it.

Given the small volume and the very low cost of the seismograph sensor (1), if one wanted to increase the sensitivity in reception of the elastic wave as desired, one should dispose in series a number of units identical to the one described above, after suitably anchoring them to a rigid support and fixing the latter to the ground or any other vibrating surface (it is known that by connecting multiple voltage generators in series, the electromotive force obtained at the external terminals is equal to the sum of each of the electromotive forces of each single generator).

Moreover, the seismograph sensor (1) can be disposed indifferently along three mutually perpendicular Cartesian axes in such a way to detect mechanical stresses along three orthogonal axes.

Given the very low cost of such a seismograph sensor and its easy installation, it can be used in generic private houses, together with easy-to-make electronics and alarm units, as alert in case of seismic phenomena or other natural disasters, such as tsunami, volcano eruptions, etc.

Another application can be found in geophysical prospecting.

## Claims

1. Seismograph sensor (1) comprising:

   - a toroidal magnet (2) disposed between a lower polar plate (3) provided with core (30) and an upper polar plate (4) in such a way to generate an air-gap (T),
   - a basket (5) mounted on the upper polar plate (4),
   - a mobile equipment comprising a mobile coil (6) that comprises a cylindrical support (60) on which a winding (61) is wound, said mobile coil (6) being centered on the core (30) to move axially in the air-gap (T) with a displacement related to the displacement suffered by the sensor due to a seismic shock,
   - at least two centering devices (7), each of them consisting in an elastic suspension (7) anchoring the mobile coil (6),
   - output terminals (67) electrically connected to the winding (61) of the mobile coil to generate an outgoing voltage signal that indicates the movement of said mobile coil (6) in the air-gap (T)

   **characterized in that**
   said elastic suspensions (7) anchor the mobile coil (6) to the basket (5), said winding (61) of the mobile coil is made of a wire (63) with diameter lower than 0.1 mm, preferably 0.06 mm; and
   on the external surface of the cylindrical support (60) of the mobile coil two conductive strips (62) are connected to the ends of the wire (63) of said winding and connected to corresponding flexible wires (66) with higher diameter than the wire of the winding, ending in said output terminals (67).

2. Seismograph sensor (1) as claimed in claim 1, **characterized in that** the elastic constant of said centering devices (7) and the size and mass of the mobile equipment comprising said mobile coil (6) are chosen in such a way to obtain a resonance frequency of said mobile equipment included within the typical frequency band of seismic waves.

3. Seismograph sensor (1) as claimed in claim 1 or 2, **characterized in that** said core (30) has such a length that the winding (61) of the mobile coil always sees the core (30) inside it during the movement of the mobile equipment.

4. Seismograph sensor (1) as claimed in any one of the above claims, **characterized in that** said cylindrical support (60) of the mobile coil has a diameter higher than 100 mm.

5. Seismograph sensor (1) as claimed in any one of the above claims, **characterized in that** it comprises an inertial mass (8) fixed to said cylindrical support (60) of the mobile coil.

6. Seismograph sensor (1) as claimed in claim 5, **characterized in that** said inertial mass (8) has a weight comprised between 100 and 200 g.

7. Seismograph sensor (1) as claimed in any one of the above claims, **characterized in that** it comprises two centering devices (7) in parallel spaced position.

8. Seismograph sensor (1) as claimed in claim 7, **characterized in that** said centering device (7) is made of a metal plate with central collar (70) fixed to the external surface of the cylindrical support (60) of said mobile coil, a peripheral collar (71) fixed to said basket (5) and at least two spokes (72) connecting said central collar (70) with said peripheral collar (71).

9. Seismograph sensor (1) as claimed in any one of the above claims, **characterized in that** the product of the magnetic induction field (B) in the air-gap by the length (I) of the wire (63) of the winding of the mobile coil is higher than 1000 Tesla *m.

10. Seismograph sensor (1) as claimed in claim 9, **characterized in that** said magnet (2) is a neodymium magnet.

11. Seismograph sensor (1) as claimed in any one of the above claims, **characterized in that** it comprises a second winding wound on said winding (61) of the mobile coil, in which the ends of the wire of the second winding are short-circuited.

12. Seismograph sensor (1) as claimed in any one of the above claims, **characterized in that** it comprises a lid (9) applied to said basket (5) to cover the inside of said seismograph sensor.

13. Array of seismograph sensors comprising a plurality of seismograph sensors (1) as claimed in any one of the above claims connected in series.

**Patentansprüche**

1. Seismografischer Sensor (1), umfassend:

   - einen ringförmigen Magneten (2), der zwischen einer mit Kern (30) versehenen, unteren Polendplatte (3) und einer oberen Polendplatte (4) angeordnet ist, um einen Luftspalt (T) zu erzeugen
   - einen Korb (5), der auf der oberen Polendplatte (4) befestigt ist,
   - eine bewegliche Ausrüstung, umfassend eine bewegliche Spule (6), die einen zylindrischen Träger (60) umfasst, um den eine Wicklung (61) gewickelt ist, wobei die bewegliche Spule (6) auf dem Kern (30) zentriert ist , um sich axial zwischen in dem Luftspalt (T) zu bewegen, mit einer Bewegung, die von der vom Sensor infolge eines Erdstoßes erfahrenen Bewegung abhängt,
   - mindestens zwei Zentriervorrichtungen (7), die jeweils aus einer elastischen Aufhängung bestehen, die die bewegliche Spule (6) verankert,
   - Ausgangsklemmen (67), die elektrisch an der Wicklung (61) der beweglichen Spule angeschlossen sind, um am Ausgang ein Spannungssignal zu erzeugen, das die Bewegung der beweglichen Spule (6) im Luftspalt (T) anzeigt,

   **dadurch gekennzeichnet, dass**
   die elastischen Aufhängungen (7) die bewegliche Spule (6) am Korb (5) verankern,
   die Wicklung (61) der beweglichen Spule aus einem Leitungsdraht (63) mit einem Durchmesser von weniger als 0,1 mm, vorzugsweise 0,06 mm, hergestellt ist und
   auf der Außenfläche des zylindrischen Trägers (60) der beweglichen Spule zwei Leitungsstreifen (62) angeordnet sind, die an den Enden des Drahtes (63) der Wicklung angeschlossen und jeweils an flexible Leiter (66) angeschlossen sind, deren Durchmesser größer als der des Wicklungsdrahtes ist und die in Ausgangsklemmen (67) enden.

2. Seismografischer Sensor (1) nach Anspruch 1, **dadurch gekennzeichnet, dass** der elastische Festwert der Zentriervorrichtungen (7) sowie die Abmessungen und die Masse der auswechselbaren Nadeleinheit, die die bewegliche Spule (6) umfasst, entsprechend gewählt sind, um eine Resonanzfrequenz der auswechselbaren Nadeleinheit zu erhalten, deren Wert in den Bandbereich typischer Frequenzen von Erdbebenwellen fällt.

3. Seismografischer Sensor (1) nach Anspruch 1 oder 2, **dadurch gekennzeichnet, dass** der Kern (30) eine entsprechende Länge aufweist, dass die Wicklung (61) der beweglichen Spule während der Bewegung der auswechselbaren Nadeleinheit stets den Kern (30) in ihrem Innern sieht.

4. Seismografischer Sensor (1) nach einem beliebigen der vorstehenden Ansprüche, **dadurch gekennzeichnet, dass** der zylindrische Träger (60) der beweglichen Spule einen Durchmesser von über 100 mm aufweist.

5. Seismografischer Sensor (1) nach einem beliebigen der vorstehenden Ansprüche, **dadurch gekennzeichnet, dass** er eine Inertialmasse (8) umfasst, die am zylindrischen Träger (60) der beweglichen Spule befestigt ist.

6. Seismografischer Sensor (1) nach Anspruch 5, **dadurch gekennzeichnet, dass** die Inertialmasse (8) ein Gewicht zwischen 100 und 200 g besitzt.

7. Seismografischer Sensor (1) nach einem beliebigen der vorstehenden Ansprüche, **dadurch gekennzeichnet, dass** er zwei Zentriervorrichtungen (7) umfasst, die parallel und voneinander beabstandet angeordnet sind.

8. Seismografischer Sensor (1) nach einem beliebigen der vorstehenden Ansprüche, **dadurch gekennzeichnet, dass** die Zentriervorrichtung (7) aus einer Metallfolie besteht, die einen mittigen Bund (70) besitzt, der auf der Außenfläche des zylindrischen Trägers (60) der beweglichen Spule befestigt ist, einen peripheren Bund (71), der an dem Korb (5) befestigt ist und mindestens zwei Speichen (72), die den mittigen Bund (70) mit dem peripheren Bund (71) verbinden.

9. Seismografischer Sensor (1) nach einem beliebigen der vorstehenden Ansprüche, **dadurch gekennzeichnet, dass** das Produkt aus dem magnetischen Induktionsfeld (B) im Luftspalt und der Länge (I) des Leitungsdrahtes (63) der Wicklung der beweglichen Spule größer als 1000 Tesla * m ist.

10. Seismografischer Sensor (1) nach Anspruch 9, **dadurch gekennzeichnet, dass** der Magnet (2) ein Neodym-Magnet ist.

11. Seismografischer Sensor (1) nach einem beliebigen der vorstehenden Ansprüche, **dadurch gekennzeichnet, dass** er eine zweite Wicklung umfasst, die auf die Wicklung (61) der beweglichen Spule gewikkelt ist, wobei die Enden des Leitungsdrahtes der zweiten Wicklung kurzgeschlossen sind.

12. Seismografischer Sensor (1) nach einem beliebigen der vorstehenden Ansprüche, **dadurch gekennzeichnet, dass** er einen Deckel (9) umfasst, der auf dem Korb (5) angebracht wird, um das Innere des seismografischen Sensors zu bedecken.

13. Array seismografischer Sensoren umfassend mehrere seismografische Sensoren (1) nach einem beliebigen der vorstehenden Ansprüche, die hintereinander geschaltet sind.

**Revendications**

1. Capteur sismographique (1) comprenant:

   - un aimant (2) de forme toroïdale disposé entre une plaque polaire inférieure (3) dotée d'un noyau (30) et une plaque polaire supérieure (4), de manière à générer un entrefer (T),
   - un panier (5) monté sur la plaque polaire supérieure (4),
   - un équipage mobile comprenant une bobine mobile (6) qui comprend un support cylindrique (60) sur lequel un enroulement (61) est enroulé, étant la dite bobine mobile (6) centrée sur le noyau (30) pour se déplacer de manière axiale dans l'entrefer (T) avec un déplacement qui est en fonction du déplacement subi par le capteur à la suite d'une secousse sismique,
   - au moins deux centreurs (7), chacun consistant en une suspension élastique qui ancre la bobine mobile (6),
   - des terminaux de sortie (67) électriquement reliés à l'enroulement (61) de la bobine mobile pour générer en sortie un signal de tension indicatif du déplacement de dite bobine mobile (6) dans l'entrefer (T),

   **caractérisé en ce que**
   les dites suspensions élastiques (7) ancrent la bobine mobile (6) au panier (5),
   le dit enroulement (61) de la bobine mobile est réalisé moyennant un fil conducteur (63) ayant un diamètre inférieur à 0,1 mm, préférablement 0,06 mm, et sur la surface externe du support cylindrique (60) de la bobine mobile, il y a deux bandes conductibles (62) reliées aux extrémités du fil (63) du dit enroulement et reliées à des respectifs conducteurs flexibles (66) ayant un diamètre majeur par rapport au fil de l'enroulement et qui se terminent par les dits terminaux de sortie (67).

2. Capteur sismographique (1) selon la revendication 1, **caractérisé en ce que** la constante élastique des dits centreurs (7), ainsi que les dimensions et la masse de l'équipage mobile comprenant la dite bobine mobile (6) sont sélectionnés de manière à obtenir une fréquence de résonance du dit équipage mobile dont la valeur tombe à l'interne de la bande de fréquences typiques des ondes sismiques.

3. Capteur sismographique (1) selon les revendications 1 ou 2, **caractérisé en ce que** le dit noyau (30) a une longueur telle que, lors du déplacement de l'équipage mobile, l'enroulement (61) de la bobine mobile voit toujours le noyau (30) à son interne.

4. Capteur sismographique (1) selon l'une quelconque des revendications précédentes, **caractérisé en ce que** le dit support cylindrique (60) de la bobine mobile a un diamètre majeur de 100 mm.

5. Capteur sismographique (1) selon l'une quelconque des revendications précédentes, **caractérisé en ce qu'**il comprend une masse inertielle (8) fixée au dit support cylindrique (60) de la bobine mobile.

6. Capteur sismographique (1) selon la revendication 5, **caractérisé en ce que** la dite masse inertielle (8) a un poids compris entre 100 et 200 g.

7. Capteur sismographique (1) selon l'une quelconque des revendications précédentes, **caractérisé en ce qu'**il comprend deux centreurs (7) disposés en parallèle et écartés entre eux.

8. Capteur sismographique (1) selon la revendication 7, **caractérisé en ce que** le dit centreur (7) est constitué d'une lame métallique ayant un collier central (70) fixé sur la surface externe du support cylindrique (60) de la dite bobine mobile, un collier périphérique (71) fixé sur le dit panier (5) et au moins deux branches (72) qui relient le dit collier central (70) au dit collier périphérique (71).

9. Capteur sismographique (1) selon l'une quelconque des revendications précédentes, **caractérisé en ce que** le produit entre le champ d'induction magnétique (B) dans l'entrefer et la longueur (1) du fil conducteur (63) de l'enroulement de la bobine mobile est majeur de 1000 Tesla * m.

10. Capteur sismographique (1) selon la revendication 9, **caractérisé en ce que** le dit aimant (2) est un aimant au néodyme.

11. Capteur sismographique (1) selon l'une quelconque des revendications précédentes, **caractérisé en ce qu'**il comprend un second enroulement enroulé sur le dit enroulement (61) de la bobine mobile, où les extrémités du fil conducteur du second enroulement sont court-circuitées.

12. Capteur sismographique (1) selon l'une quelconque des revendications précédentes, **caractérisé en ce qu'**il comprend un couvercle (9) appliqué au dit panier (5) pour couvrir l'interne de dit capteur sismographique.

**13.** Réseau de capteurs sismographiques comprenant une pluralité de capteurs sismographiques (1) selon l'une quelconque des revendications précédentes, connectés en série.

FIG. 1

EP 2 325 673 B1

FIG. 1A

FIG. 2

FIG. 3

FIG. 4

**EP 2 325 673 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0184401 A
- US 3067404 A
- GB 2366474 A
- US 2487029 A
- US 3344397 A
- EP 0188014 A